# EUROPEAN PATENT SPECIFICATION

(11) **EP 1 937 404 B1**
(45) Date of publication and mention of the grant of the patent: **23.05.2012**
(21) Application number: 06801064.4
(22) Date of filing: 09.08.2006
(51) Int. Cl.: B01J 23/00, B22F 1/00, B22F 9/30

(54) **PROCESS FOR THE PRODUCTION OF CATALYST-COATED SUPPORT MATERIALS**
VERFAHREN ZUR HERSTELLUNG VON KATALYSATORBESCHICHTETEN TRÄGERMATERIALIEN
PROCEDE PERMETTANT DE PRODUIRE DES MATERIAUX DE SUPPORT RECOUVERTS D'UN CATALYSEUR

(30) Priority: 10.08.2005 US 200966; 10.08.2005 US 200965; 10.08.2005 US 200985
(43) Date of publication of application: 02.07.2008
(73) Proprietor: Directa Plus S.p.A., 22074 Lommazzo (CO) (IT)
(72) Inventor: MERCURI, Robert A.,, Seven Hills, Ohio 44131 (US)
(74) Representative: Cremer & Cremer
(86) International application number: PCT/US2006/031082
(87) International publication number: WO 2007/021770

(56) References cited:
- RU-C1- 2 161 549
- US-A- 2 900 245
- US-A- 3 075 494
- US-A- 3 158 499
- US-A- 3 955 962
- US-A- 3 998 758
- US-A1- 2004 009 118
- US-A1- 2004 120 882
- US-B1- 6 716 525
- US-B1- 6 761 870
- HUH S H ET AL: "A design of a nanometer size metal particle generator: Thermal decomposition of metal carbonyls", REVIEW OF SCIENTIFIC INSTRUMENTS, AIP, MELVILLE, NY, US, vol. 70, no. 11, 1 November 1999 (1999-11-01), pages 4366-4369, XP012037195, ISSN: 0034-6748

## Description

### Technical Field

The present invention relates to a process for the production of catalyst non-noble metal nano-scale particles, and the direct attachment of the particles to support materials, especially in a continuous manner. By "non-noble metal" is meant a metal other than one of the noble metals (generally considered to be gold, silver, platinum, palladium, iridium, rhenium, mercury, ruthenium and osmium). By the practice of the present invention, nano-scale catalyst particles can be produced with greater speed, precision and flexibility than can be accomplished with conventional processing, and the particles produced can be directly affixed to support materials in a precise and cost- effective manner.

### Background Art

Catalysts are becoming ubiquitous in modem chemical processing. Catalysts are used in the production of materials such as fuels, lubricants, refrigerants, polymers, drugs, etc., as well as playing a role in water and air pollution mediation processes. Indeed, catalysts have been ascribed as having a role in fully one third of the material gross national product of the United States, as discussed by Alexis T. Bell in "The Impact of Nanoscience on Heterogeneous Catalysis" (Science, Vol. 299, pg. 1688, 14 March 2003).

Generally speaking, catalysts can be described as small particles deposited on high surface area solids. Traditionally, catalyst particles can range from the sub-micron up to tens of microns. One example described by Bell is the catalytic converter of automobiles, which consist of a honeycomb whose walls are coated with a thin coating of porous aluminum oxide (alumina). In the production of the internal components of catalytic converters, an aluminum oxide wash coat is impregnated with nanoparticles of a platinum group metal catalyst material. In fact, most industrial catalysts used today include platinum group metals especially platinum, rhodium and iridium or alkaline metals like cesium, at times In combination with other metals such as iron or nickel.

The size of these catalyst metal domains has been recognized as extremely significant in their catalytic function. Indeed it is also noted by Bell that the performance of a catalyst can be greatly affected by the particle size of the catalyst particle, since properties such as surface structure and the electronic properties of the particles can change as the size of the catalyst particles changes.

In his study on nanotechnology of catalysis presented at the Frontiers in Nanotechnology Conference on May 13, 2003, Eric M. Stuve, of the Department of Chemical Engineering of the University of Washington, described how the general belief is that the advantage of use of nano-sized particles in catalysis is due to the fact that the available surface area of small particles is greater than that of larger particles, thus providing more metal atoms at the surface to optimize catalysis using such nano-sized catalyst materials. However, Stuve points out that the advantages of the use of nano-sized catalyst particles may be more than simply due to the size effect. Rather, the use of nanoparticles can exhibit modified electronic structure and a different shape with actual facets being present in the nanoparticles, which provide for interactions which can facilitate catalysis. Indeed, Cynthia Friend, in "Catalysis On Surfaces" (Scientific American, April 1993, p. 74), posits catalyst shape, and, more specifically, the orientation of atoms on the surface of the catalyst particles, as important in catalysis. In addition, differing mass transport resistances may also improve catalyst function. Thus, the production of nano-sized metal particles for use as catalysts on a more flexible and commercially efficacious platform is being sought. Moreover, other applications for nano-scale particles are being sought, whether for the platinum group metals traditionally used for catalysis or other metal particles.

Conventionally, however, catalysts are prepared in two ways. One such process involves catalyst materials being bonded to the surface of carrier particles such as carbon blacks or other like materials, with the catalyst-loaded particles then themselves being loaded on the surface at which catalysis is desired. One example of this is in the fuel cell arena, where carbon black or other like particles loaded with platinum group metal catalysts are then themselves loaded at the membrane/electrode interface to catalyze the breakdown of molecular hydrogen into its component protons and electrons, with the resulting electrons passed through a circuit as the current generated by the fuel cell. One major drawback to the preparation of catalyst materials through loading on a carrier particle is in the amount of time the loading reactions take, which can be measured in hours in some cases.

To wit, in U.S. Patent 6,716,525, Yadav and Pfaffenbach describe the dispersing of nano-scale powders on coarser carrier powders in order to provide catalyst materials. The carrier particles of Yadav and Pfaffenbach include oxides, carbides, nitrides, borides, chalcogenides, metals and alloys. The nanoparticles dispersed on the carriers can be any of many different materials according to Yadav and Pfaffenbach, including precious metals such as platinum group metals, rare earth metals, the so-called semi-metals, as well as non-metallic materials, and even clusters such as fullerenes, alloys and nanotubes.

An additional drawback to the use of conventional carrier- particle loaded catalysts lies in the fact that the typical method of applying these materials to the support on which they are to be employed is by forming a suspension of the particles in a fluoroelastomer and then painting the admixed fluid onto the support, after which the suspension is "baked" to bond the content to the support, leaving a coating of the catalyst coated carrier particles on the surface of the support. This method does not allow for a great deal of precision, resulting in the application of catalyst material at locations where it is not needed or desired. Given the cost of catalyst materials, especially the noble metal materials typically considered most efficacious, this "painting" method of application of catalysts is extremely disadvantageous.

Alternatively, the second common method for preparing catalyst materials involves directly loading catalyst metals such as platinum group metals on a support without the use of carrier particles which can interfere with the catalytic reaction. For example, many automotive catalytic converters, as discussed above, have catalyst particles directly loaded, on the aluminum oxide honeycomb which forms the converter structure. The processes needed for direct deposition of catalytic metals on support structures, however, are generally operated at extremes of temperature and/or pressures. For instance one such process is chemical sputtering at temperatures in excess of 1,500 °C and under conditions of high vacuum. Thus, these processes are difficult and expensive to operate.

Thus, a Hobson's choice is created: either use the method entailing painting catalyst-loaded carrier mixtures, with the resultant inefficiencies, or use the expensive and difficult direct deposition methods currently available. A partial solution to the dilemma lies in the potential for catalytic activity in nano-scale non-noble metals. That is, it is believed that metals such as nickel and iron, if present as nano-scale particles, may be effective as catalysts, since the surface area and surface effect advantages of non-noble metal particles may permit the use of non-noble metals, such as nickel, iron, etc., as catalyst materials. While this is significant in may ameliorating many of the issues concerning the cost of noble metals, the inefficiencies of the "painting" method and cost and difficulties of direct deposition methods remain.

In an attempt to provide nano-scale catalyst particles, Bert and Bianchini, in International Patent Application Publication No. WO 2004/036674, suggest a process using a templating resin to produce nano-scale particles for fuel cell applications. Even if technically feasible, however, the Bert and Bianchini methods require high temperatures (on the order of 300 °C to 800 °C), and require several hours. Accordingly, these processes are of limited value.

Taking a different approach, Sumit Bhaduri, in "Catalysis With Platinum Carbonyl Clusters," Current Science, Vol. 78, No. 11, 10 June 2000, asserts that platinum carbonyl clusters, by which is meant polynuclear metal carbonyl complexes with three or more metal atoms, have potential as redox catalysts, although the Bhaduri publication acknowledges that the behavior of such carbonyl clusters as redox catalysts is not understood in a comprehensive manner. Indeed, metal carbonyls have been recognized for use in catalysis in other applications.

Metal carbonyls have also been used as, for instance, anti-knock compounds in unleaded gasolines. However, more significant uses of metal carbonyls are in the production and/or deposition of the metals present in the carbonyl, since metal carbonyls are generally viewed as easily decomposed and volatile resulting in deposition of the metal and carbon monoxide.

Generally speaking, carbonyls are transition metals combined with carbon monoxide and have the general formula Mₓ(CO)_{y}, where M is a metal in the zero oxidation state and where x and y are both integers. While many consider metal carbonyls to be coordination compounds, the nature of the metal to carbon bond leads some to classify them as organometallic compounds. In any event, the metal carbonyls have been used to prepare high purity metals, although not for the production of nano-scale metal particles. As noted, metal carbonyls have also been found useful for their catalytic properties such as for the synthesis of organic chemicals in gasoline antiknock formulations.

Accordingly, what is needed is a process for the production of nano-scale metal catalyst particles, especially non-noble metal nano-scale particles, for direct deposition on a support. More particularly, the desired process can be used for the preparation of nano-scale catalyst particles directly on a surface without the requirement for extremes in temperature and/or pressures.

Different approaches for the production of metallic films for applications as catalysts on different substrates using thermal decomposition of metal carbonyls are discusses in the patents US 3 075 494 A by Toulmin, US 3 158 499 A by Jenkin, and US 3 998 758 A by Clyde.

In accordance to the teachings of Dawihl et al. in US 3 955 962 A, fibers of metal having a very large aspect ratio are grown in a magnetic field using metal carbonyls. Metal atoms agglomerate under the influence of the flux lines in parallel on a support.

The process described by Rjabko et al. in RU 2 161 549 C1 is preferably used for the production of Ni-nanoparticles with controlled size in the range 0.5 µm to 5 µm, where control is obtained mainly by means of temperature. This method uses thermal decomposition of Ni carbonyl diluted with the diluent gas carbon oxide from 10 up to 80 vol. % with addition of oxygen by 0,01 to 0,1 vol. %.

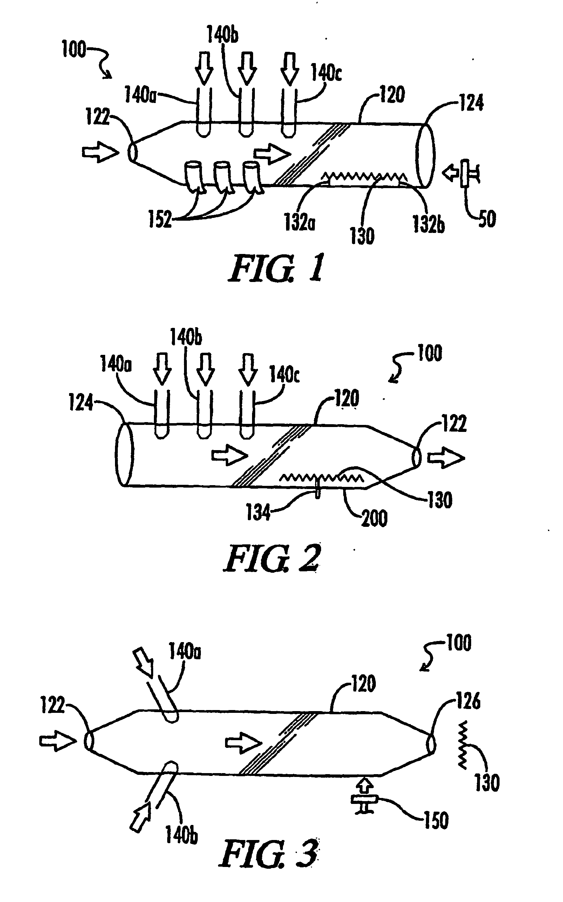

In the article by S. H. Huh et al., Rev. Sci. Inst. 70, Nr. 11, 4366 to 4369 (1999) an electrically heated filament is used to decompose metal carbonyls. And nanometre sized metal particles are collected from an experimental setup closed reactor with one gas feeder (S. H. Huh et al. figure1). The article also describes formation of alloy nanometre sized particles from iron and molybdenum.

### Disclosure of the Invention

A process according to claim 1 for the production of nano-scale catalyst particles is presented. By nano-scale particles is meant particles having an average diameter of no greater than 1,000 nanometers (nm), e.g., no greater than one micron. More preferably, the particles produced by the inventive system have an average diameter no greater than 250 nm, most preferably no greater than 20 nm.

The particles produced by the invention can be roughly spherical or isotropic, meaning they have an aspect ratio of 1.4 or less, although particles having a higher aspect ratio can also be prepared and used as catalyst materials. Aspect ratio refers to the ratio of the largest dimension of the particle to the smallest dimension of the particle (thus, a perfect sphere has an aspect ratio of 1.0). The diameter of a particle for the purposes of this invention is taken to be the average of all of the diameters of the particle, even in those cases where the aspect ratio of the particle is greater than 1.4.

In the practice of the present invention, a decomposable metal-containing non-noble metal carbonyl moiety is fed into a flow through reactor vessel and sufficient energy to decompose the moiety applied, such that the moiety decomposes and nano-scale metal particles are deposited on a support. The decomposable moiety used in the invention can be any decomposable metal-containing material, including an organometallic compound, a metal complex or a metal coordination compound, provided that the moiety can be decomposed to provide free metals under the conditions existing in the reactor vessel, such that the free metal can be deposited on a support. Preferably, the decomposable moiety for use in the invention is a non-noble metal carbonyl, such as nickel or iron carbonyls.

The particular decomposable moiety or moieties employed depends on the catalyst particle desired to be produced. In other words, if the desired nano-scale catalyst particles comprise nickel and iron, the decomposable moieties employed can be nickel carbonyl, Ni(CO)₄, and iron carbonyl, Fe(CO)₅; likewise, if noble metal nano-scale catalyst particles are sought, then noble metal carbonyls can be used as starting materials. In addition, polynuclear metal carbonyls such as diiron nonacarbonyl, Fe2(CO)₉, triiron dodecacarbonyl, Fe₃(CO)₁₂, decacarbonyldimanganese, Mn₂(CO)₁₀ can be employed; indeed, many of the noble metal carbonyls can be provided as polynuclear carbonyls, such as dodecacarbonyl-triruthenium, Ru₃(CO)₁₂, and tri-µ-carbonyl-nonacarbonyltetrairidium, Ir₄(CO)₁₂. Moreover, heteronuclear carbonyls, like RU₂Os(CO)₁₂, Fe₂Ru(CO)₁₂ and Zn[Mn(CO)₅]₂ are known and can be employed in the production of nano-scale catalyst particles in accordance with the present invention. The polynuclear metal carbonyls can be particularly useful where the nano-scale catalyst particles desired are alloys or combinations on more than one metallic specie.

The metal carbonyls useful in producing nano-scale catalyst particles in accordance with the present invention can be prepared by a variety of methods, many of which are described in "Kirk-Othmer Encyclopedia of Chemical Technology," Vol. 5, pp. 131-135 (Wiley Interscience 1992). But do not form part of the invention. For instance, metallic nickel and iron can readily react with carbon monoxide to form nickel and iron carbonyls, and it has been reported that cobalt, molybdenum and tungsten can also react carbon monoxide, albeit under conditions of higher temperature and pressure. Other methods for forming metal carbonyls include the synthesis of the carbonyls from salts and oxides in the presence of a suitable reducing agent (indeed, at times, the carbon monoxide itself can act as the reducing agent), and the synthesis of metal carbonyls in ammonia. In addition, the condensation of lower molecular weight metal carbonyls can also be used for the preparation of higher molecular weight species, and carbonylation by carbon monoxide exchange can also be employed.

The synthesis of polynuclear and heteronuclear metal carbonyls, including those discussed above, is usually effected by metathesis or addition. Generally, these materials can be synthesized by a condensation process involving either a reaction induced by coordinatively unsaturated species or a reaction between coordinatively unsaturated species in different oxidation states. Although high pressures are normally considered necessary for the production of polynuclear and heteronuclear carbonyls (indeed, for any metal carbonyls other than those of transition metals), the synthesis of polynuclear carbonyl, including manganese, ruthenium and iridium carbonyls, under atmospheric pressure conditions is also believed feasible.

It must be borne in mind in working with the metal carbonyls, that care in handling must be used at all times, since exposuire to metal carbonyls can be a serious health threat. Indeed, nickel carbonyl is considered to be one of the more poisonous inorganic industrial compounds. While other metal carbonyls are not as toxic as nickel carbonyl, care still needs to be exercised in handling them.

The inventive process is advantageously practiced in an apparatus comprising a reactor vessel, at least one feeder for feeding or supplying the decomposable moiety into the reactor vessel, a support which is operatively connected to the reactor vessel for deposit thereon of nano- scale catalyst particles produced on decomposition of the decomposable moiety, and a source of energy capable of decomposing the decomposable moiety. The source of energy should act on the decomposable moiety such that the moiety decomposes to provide nano-scale metal particles which are deposited on the support.

The reactor vessel can be formed of any material which can withstand the conditions under which the decomposition of the moiety occurs. Generally, the reactor vessel is permitting reactants to flow into and out of the vessel. The vessel can be under subatmospheric pressure, by which is meant pressures as low as about 333 hPa (250 millimeters (mm)). Indeed, the use of subatmospheric pressures, as low as about 1.33 hPa (1 mm) of pressure, can accelerate decomposition of the decomposable moiety and provide smaller nano-scale particles. However, one advantage of the inventive process is the ability to produce nano-scale particles at generally atmospheric pressure, i.e., about 1013 hPa (760 mm). Alternatively, there may be advantage in cycling the pressure, such as from sub-atmospheric to generally atmospheric or above, to encourage nano-deposits within the structure of the particles or supports. There can be a valve or like system for relieving pressure build-up caused, for instance, by the generation of carbon monoxide (CO) or other by-products. Accordingly, the use of the expression "closed system" is meant to distinguish a system from a flow-through type of system as discussed herein.

When the reactor vessel is a "now-through" reactor vessel, that is, a conduit through which the reactants flow while reacting, the flow of the reactants can be facilitated by drawing a partial vacuum on the conduit, although no lower than 333 hPa (250 millimeters (mm)) is necessary in order to draw the reactants through the conduit towards the vacuum apparatus, or a flow of an inert gas such as argon or nitrogen can be pumped through the conduit to thus carry the reactants along the flow of the inert gas.

Indeed, the flow-through reactor vessel can be a fluidized bed reactor, where the reactants are borne through the reactor on a stream of a fluid. This type of reactor vessel may be especially useful where the nano- scale metal particles produced are intended to be attached to carrier materials being carbon blacks, flowing along with the reactants.

The at least one feeder supplying the decomposable moiety into the reactor vessel can be any feeder sufficient for the purpose, such as an injector which carries the decomposable moiety along with a jet of a gas such as an inert gas like argon or nitrogen, to thereby carry the decomposable moiety along the jet of gas through the injector nozzle and into the reactor vessel. The gas employed can include a reactant, like oxygen or ozone. Alternatively, a reducing gas, such as hydrogen, may be advantageous in precluding oxidation of the metal nano particles. This type of feeder can be used whether a reactor vessel is a closed system or a flow-through reactor.

Supports useful in the practice of the invention can be any material on which the nano-scale catalyst particles produced from decomposition of the decomposable moieties can be deposited and utilized; more specifically, the support is the material on which the catalyst metal is ultimately destined, such as the aluminum oxide honeycomb of a catalytic converter in order to deposit nano-scale particles on catalytic converter components without the need for extremes of temperature and pressure required by sputtering and like techniques.

The support can be disposed within the reactor vessel (indeed this is practical in a flow-through reactor). However, in a flow-through reactor vessel, the flow of reactants can be directed at a support positioned outside the vessel, at its terminus, especially where the flow through the flow-through reactor vessel is created by a flow of an inert gas.

The energy employed to decompose the decomposable moiety can be any form of energy capable of accomplishing this function. For instance, electromagnetic energy such as infrared, visible, or ultraviolet light of the appropriate wavelengths can be employed. Additionally, microwave and/or radio wave energy, or other forms of sonic energy can also be employed (example, a spark to initiate "explosive" decomposition assuming suitable moiety and pressure), provided the decomposable moiety is decomposed by the energy employed. Thus, microwave energy, at a frequency of about 2.4 gigahertz (GHz) or induction energy, at a frequency which can range from as low as 180 hertz (Hz) up to as high as 13 mega Hz can be employed. A skilled artisan would readily be able to determine the form of energy useful for decomposing the different types of decomposable moieties which can be employed.

One preferred form of energy which can be employed to decompose the decomposable moiety is heat energy supplied by, e.g., heat lamps, radiant heat sources, or the like. Such energy sources can be especially useful for highly volatile moieties, such as metal carbonyls. In such case, the temperatures needed are no greater than 250 °C. Indeed, generally, temperatures no greater than 200 °C are needed to decompose the decomposable moiety and produce nano-scale catalyst particles therefrom.

Depending on the source of energy employed, the reactor vessel should be designed so as to not cause deposit of the nano-scale metal particles on the vessel itself (as opposed to the support) as a result of the application of the source of energy. In other words, if the source of energy employed heats the reactor vessel itself to a temperature at or somewhat higher than the decomposition temperature of the decomposable moiety during the process of applying heat to the decomposable moiety to effect decomposition, then the decomposable moiety will decompose at the walls of the reactor vessel, thus coating the reactor vessel walls with nano-scale metal particles rather than depositing the nano-scale metal particles on the support (one exception to this general rule occurs if the walls of the vessel are so hot that the decomposable carbonyl decomposes within the reactor vessel and not on the vessel walls, as discussed in more detail below).

One way to avoid this is to direct the energy directly at the support. For instance, if heat is the energy applied for decomposition of the decomposable moiety, the support can be equipped with a source of heat itself, such as a resistance heater in or at a surface of the support such that the support is at the temperature needled for decomposition of the decomposable moiety and the reactor vessel itself is not. Thus, decomposition occurs at the support and deposition of nano-scale catalyst particles occurs principally on the support. When the source of energy employed is other than radiant heat, the source of energy can be chosen such that the energy couples with the support, such as when microwave or induction energy is employed. In this instance, the reactor vessel should be formed of a material which is relatively transparent to the source of energy, especially as compared to the material from which the support is formed.

Similarly, especially in situations when the support is disposed outside the reactor vessel such as when a flow-through reactor vessel is employed with the support at its terminus, where the appropriate conditions of gas mixture, pressure and temperature exist so that decomposition and deposition take place, the initial decomposition of the decomposable moiety may occur as the moiety is flowing through the flow-through reactor and the reactor vessel should be transparent to the energy employed to decompose the decomposable moiety. The majority of the decomposition of the decomposable moiety takes place at the heated support to effectively form and bond the nano-clusters to the support. Alternatively, whether or not the support is inside the reactor vessel, or outside it, the reactor vessel can be maintained at a temperature below the temperature of decomposition of the decomposable moiety, where heat is the energy employed. One way in which the reactor vessel can be maintained below the decomposition temperatures of the moiety is through the use of a cooling medium like cooling coils or a cooling jacket. A cooling medium can maintain the walls of the reactor vessel below the decomposition temperatures of the decomposable moiety, yet permit heat to pass within the reactor vessel to heat the decomposable moiety and cause decomposition of the moiety and production of nano-scale catalyst particles on or within the support.

In an alternative embodiment which is especially applicable where both the walls of the flow-through reactor vessel and the gases in the reactor vessel are generally equally susceptible to the heat energy applied (such as when both are relatively transparent), heating the walls of the flow-through reactor vessel, to a temperature substantially higher than the decomposition temperature of the decomposable moiety can permit the reactor vessel walls to themselves act as the source of heat. In other words, the heat radiating from the reactor walls will heat the inner spaces of the reactor vessel to temperatures at least as high as the decomposition temperature of the decomposable moiety. Thus, the moiety decomposes before impacting the vessel walls, forming nano-scale particles which are then carried along with the gas flow within the reactor vessel, especially where the gas velocity is enhanced by a vacuum. This method of generating decomposition heat within the reactor vessel is useful where the nano-scale particles formed from decomposition of the decomposable moiety are being attached to carrier materials being carbon black also being carried along with the flow within the reactor vessel. In order to heat the walls of the reactor vessel to a temperature sufficient to generate decomposition temperatures for the decomposable moiety within the reactor vessel, the walls of the reactor vessel are preferably heated to a temperature which is significantly higher than the temperature desired for decomposition of the decomposable moiety(ies) being fed into the reactor vessel, which can be the decomposition temperature of the decomposable moiety having the highest decomposition temperature of those being fed into the reactor vessel, or a temperature selected to achieve a desired decomposition rate for the moieties present. For instance, if the decomposable moiety having the highest decomposition temperature of those being fed into the reactor vessel is nickel carbonyl, having a decomposition temperature of about 50 °C, then the walls of the reactor vessel should preferably be heated to a temperature such that the moiety would be heated to its decomposition temperature several (at least three) millimeters from the walls of the reactor vessel. The specific temperature is selected based on internal pressure, composition and type of moiety, but generally is not greater than 250 °C and is typically less than 200 °C to ensure that the internal spaces of the reactor vessel are heated to at least 50 °C.

In any event, the reactor vessel, as well as the feeders, can be formed of any material which meets the requirements of temperature and pressure discussed above. Such materials include a metal, graphite, high density plastics or the like. Most preferably the reactor vessel and related components are formed of a transparent material, such as quartz or other forms of glass, including high temperature robust glass commercially available as Pyrex^{®} materials.

Thus, in the process of the present invention, decomposable metal-containing moieties are fed into a reactor vessel and exposed to a source of energy sufficient to decompose the moieties and produce nano-scale catalyst particles. The moieties can be fed into a flow-through reactor where the flow is created by drawing a vacuum or flowing an inert gas through the flow-through reactor. The energy applied is sufficient to decompose the decomposable moiety in the reactor or as it as flowing through the reactor, and free the metal from the moiety and thus create nano-scale catalyst particles which are deposited on a support. Where heat is the energy used to decompose the decomposable moiety, temperatures no greater than 250 °C, more preferably no greater than 200 °C are required to produce nano-scale catalyst particles, which can then be directly deposited on the substrate for which they are ultimately intended and in a process requiring only seconds and not under extreme conditions of temperature and pressure. Indeed, in certain embodiments, the inventive process can require less than about 5 seconds for the production of nano-scale metal particles.

In one embodiment of the inventive process, a single feeder feeds a single decomposable moiety into the reactor vessel for formation of nano-scale catalyst particles. In another embodiment, however, a plurality of feeders each feeds decomposable moieties into the reactor vessel. In this way, all feeders can feed the same decomposable moiety or different feeders can feed different decomposable moieties, such as additional metal carbonyls, so as to provide nano-scale particles containing different metals such as platinum-nickel combinations or nickel-iron combinations combinations as desired, in proportions determined by the amount of the decomposable moiety fed into the reactor vessel. For instance, by feeding different decomposable moieties through different feeders, one can produce a nano-scale particle having a core of a first metal, with domains of a second or third, etc. metal coated thereon. Indeed, altering the decomposable moiety fed into the reactor vessel by each feeder can alter the nature and/or constitution of the nano-scale particles produced. In other words, if different proportions of metals making up the nano-scale particles, or different orientations of the metals making up the nano-scale particles are desired, altering the decomposable moiety fed into the reactor vessel by each feeder can produce such different proportions or different orientations as can variations in temperature along the vessel.

Indeed, in the case of the flow-through reactor vessel, each of the feeders can be arrayed about the circumference of the conduit forming the reactor vessel at approximately the same location, or the feeders can be arrayed along the length of the conduit so as to feed decomposable moieties into the reactor vessel at different locations along the flow path of the conduit to provide further control of the nano-scale particles produced.

Therefore it is an object of the present invention to provide a process as defined in claim 1.

In an advantageous embodiment of the invention, the temperature within the reactor vessel is no greater than 250 °C. The pressure within the reactor vessel is preferably generally atmospheric, but pressures which vary between 1.33 hPa (1 mm) to 2666 hPa (2000 mm) can be employed. The reactor vessel is preferably formed of a material which is relatively transparent to the energy supplied by the source of energy, as compared to either the support on which the nano-scale catalyst particles are collected or the decomposable moieties themselves, such as where the source of energy is radiant heat. In fact, the support can have incorporated therein a resistance heater, or the source of energy can be a heat lamp. Where the source of energy is heat, the reactor vessel can be cooled, such as by a cooling medium like cooling coils or a cooling jacket disposed about the reactor vessel to preclude decomposition of the moiety and deposit of nano-clusters on the reactor vessel walls.

The support can be the end use substrate for the nano-scale catalyst particles produced within the reactor vessel, such as a component of an internal combustion engine system, especially automotive, catalytic converter or a fuel cell or electrolysis membrane or electrode. The support can be positioned within the reactor vessel. However, the reactor vessel can be a flow-through reactor vessel comprising a conduit, in which case the support can be disposed either external to the reactor vessel or within the reactor vessel.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principles and operations of the invention.
Fig. 1 is a side plan view of an apparatus for the production of nano-scale catalyst particles utilizing a "flow-through" reactor vessel in accordance with the process of the present invention.
Fig. 2 is an alternative embodiment of the apparatus of Fig. 1.
Fig. 3 is another alternative embodiment of the apparatus of Fig. 1, using a support external to the flow-through reactor vessel.

Referring now to the drawings, an apparatus in which the inventive process for the production of engineered nano-scale catalyst particles can be practiced is generally designated by the numeral 100. In Figs. 1 - 3 apparatus 100 is a flow-through reaction apparatus comprising flow-through reactor vessel 120.

It will be noted that Figs. 1 - 3 show apparatus 100 in a certain orientation. However, it will be recognized that other orientations are equally applicable for apparatus 100. In flow-through reactor vessel 120, the flow of inert carrier gas and decomposable moieties or the flow of decomposable moieties as drawn by a vacuum in Figs. 1 - 3 can be in any particular direction or orientation and still be effective. In addition, the terms "up" "down" "right" and "left" as used herein refer to the orientation of apparatus 100 shown in Figs. 1 - 3.

In an embodiment of the invention, as illustrated in Figs. 1 - 3, apparatus 100 comprises a flow-through reactor vessel 120 which includes a port, denoted 122, for either providing an inert gas or drawing a vacuum from reactor vessel 120 to thus create flow for the decomposable moieties to be reacted to produce nano-scale catalyst particles. In addition, apparatus 100 includes feeders 140a, 140b, 140c, which can be disposed about the circumference of reactor vessel 120, as shown in Fig. 3, or, in the alternative, sequentially along the length of reactor vessel 120, as shown in Figs. 1 and 2.

Apparatus 100 also comprises support 130 on which nano-scale catalyst particles are deposited. Support 130 can be positioned on legs 132a and 132b or, in the event a source of energy is incorporated into support 130, as a resistance heater, the control and wiring for the source of energy in support 130 can be provided through line 134, as illustrated in Fig. 2. Support 130 can be coated with an adhesive coating (not shown), or a fluoroelastomer, to modify the properties of the support 130.

As illustrated in Figs. 1 and 2, when support 130 is disposed within flow-through reactor vessel 120, a port 124 is also provided for removal of support 130 with nano-scale catalyst particles deposited thereon. In addition, port 124 should be structured such that it permits the inert gas fed through port 122 and flowing through reactor vessel 120 to egress reactor vessel 120 (as shown in Fig. 1). Port 124 can be sealed in the same manner as a closure with respect to a closed system apparatus. In other words, port 124 can be sealed by a threaded closure or pressure closure or other types of closing structures as would be familiar to the skilled artisan.

As illustrated in Fig. 3, however, support 130 can be disposed external to reactor vessel 120 in flow-through reactor apparatus 100. In this embodiment, flow-through reactor vessel 120 comprises a port 124 through which the conditioned decomposable moiety and perhaps reduced nano-scale catalyst particles are impinged on heated support 130 to thus produce and deposit the nano-scale catalyst particles on support 130. In this way it is no longer necessary to gain access to reactor vessel 120 to remove support 130 having nano-scale catalyst particles deposited thereon. In addition, during the impingement of the moieties and nano-scale catalyst particles on support 130, either port 126 or support 130 can be adjusted in order to maximize the utilization of the moiety and produced nano-scale catalyst particles by focusing on certain specific areas of support 130. This is especially useful where support 130 comprises the end use substrate for the nano-scale catalyst particles such as the component of a catalytic converter or electrode for fuel cells. Thus, the nano-scale catalyst particles are only deposited where desired and efficiency and decrease of wasted catalytic metal is facilitated.

As discussed above, reactor vessel 120 can be formed of any suitable material for use in the reaction provided it can withstand the temperature and/or pressure at which decomposition of the decomposable moiety occurs. For instance, the reactor vessel should be able to withstand temperatures up to 250 °C where heat is the energy used to decompose the decomposable moiety. Although many materials are anticipated as being suitable, including metals, plastics, ceramics and materials such as graphite, preferably reactor vessels 120 are formed of a transparent material to provide for observation of the reaction as it is proceeding. Thus, reactor vessel 120 is preferably formed of quartz or a glass such as Pyrex^{®} brand material available from Coming, Inc. of Coming, New York.

In the practice of the invention, either a flow of an inert gas such as argon or a vacuum is drawn on reactor vessel 120 and a stream of decomposable moieties is fed into reactor vessel 120 via feeders 140a, 140b, 140c, wherein at least one of the nature of the decomposable moiety introduced into the reactor vessel through each feeder, the rate of feeding of each decomposable moiety, and the order in which different species are fed into the reactor vessel is controlled. The decomposable moieties can be any metal containing moiety such as an organometallic compound, a complex or a coordination compound, such as a metal carbonyl, which can be decomposed by energy at the desired decomposition conditions of pressure and temperature. For instance, if heat is the source of energy the decomposable moiety should be subject to decomposition and production of nano-scale metal particles at temperatures no greater than 250 °C, more preferably no greater than 200 °C. Other materials, such as oxygen, can also be fed into reactor 120 to partially oxidize the nano-scale metal particles produced by decomposition of the decomposable moiety, to protect the nano-scale particles from degradation. Contrariwise, a reducing material such as hydrogen can be fed into reactor 120 to moderate or reduce oxidation of the nano-scale catalyst particles.

The energy for decomposition of the decomposable moiety is then provided to the decomposable moiety within reactor vessel 120 by, for instance, heat lamp 150. If desired, reactor vessel 120 can also be cooled by cooling coils 152 to avoid deposit of nano-scale catalyst particles on the surface of reactor vessel 120 as opposed to support 130. Nano-scale catalyst particles produced by the decomposition of the decomposable moieties are then deposited on support 130 for use.

The reactor vessel includes an access port for providing an inert gas such as argon to fill the internal spaces of the reactor vessel, the inert gas being provided by a conventional pump or the like (not shown). Similarly, the port can be used to provide a vacuum in the internal spaces of reactor vessel by using a vacuum pump or similar device (not shown). In order for the reaction to successfully proceed under vacuum in the reactor vessel, it is not necessary that an extreme vacuum condition be created. Rather negative pressures no less than 1.33 hPa (1 mm), preferably no less than 333 hPa (250 millimeters (mm)), are all that are required.

The reactor vessel has disposed therein a support which can be attached directly to the reactor vessel or can be positioned on legs within the reactor vessel. The reactor vessel also comprises a sealable opening in order to permit the reactor vessel to be opened after the reaction is completed to remove the support. The closure can be a threaded closure or a pressure closure or other types of closing systems, provided they are sufficiently air tight to maintain inert gas or the desired level of vacuum within reactor vessel.

The apparatus further comprises at least one feeder and preferably a plurality of feeders for feeding reactants, more specifically the decomposable moiety, into the reactor vessel. Two feeders can be provided. It is anticipated that other feeders can be employed depending on the nature of the decomposable moiety/moieties introduced into the vessel and, especially, on the end product nano-scale catalyst particles desired. Feeders can be fed by suitable pumping apparatus for the decomposable moiety such as venturi pumps or the like (not shown).

The source of energy comprises a source of heat, such as a heat lamp, although other radiant heat sources can also be employed. In addition, as discussed above, the source of energy can be a source of electromagnetic energy, such as infrared, visible or ultraviolet light, microwave energy, radio waves or other forms of energy, as would be familiar to the skilled artisan, provided the energy employed is capable of causing decomposition of the decomposable moiety.

In one embodiment, the source of energy can provide energy that is preferentially couple-able to the support so as to facilitate deposit of nano-scale catalyst particles produced by decomposition of the decomposable moiety on support. However, where a source of energy such as heat is employed, which would also heat reactor vessel, it may be desirable to cool reactor vessel using, e.g., cooling tubes such that the reactor vessel is maintained at a temperature below the decomposition temperature of the decomposable moiety. In this way, the decomposable moiety does not decompose at the surfaces of the reactor vessel but rather on the support.

In an alternative embodiment the support itself comprises the source of energy for decomposition of the decomposable moiety. For instance, a resistance heater powered by a connection can be incorporated into the support such that only the support is at the temperature of decomposition of the decomposable moiety, such that the decomposable moiety decomposes on the support and thus produces nano-scale catalyst particles deposited on the support. Likewise, other forms of energy for decomposition of the decomposable moiety can be incorporated into the support.

The support can be formed of any material sufficient to have deposit thereon of nano-scale catalyst particles produced by decomposition of the decomposable moiety, such as the aluminum oxide or other components of an automotive (or other internal combustion engine) catalytic converter, or the electrode or membrane of a fuel cell or electrolysis cell. Indeed, where the source of energy is itself embedded in or associated with the support, selective deposition of the catalytic nano-scale metal particles can be obtained to increase the efficiency of the catalytic reaction and reduce inefficiencies or wasted catalytic metal placement. In other words, the source of energy can be embedded within the support in the desired pattern for deposition of catalyst metal, such that deposition of the catalyst nano- scale metal can be placed where catalytic reaction is desired. In one embodiment, the support can be coated with an adhesive coating or a fluoroelastomer, which may be used to impart alternative properties to the support..

Thus the present invention provides a facile means for producing nano-scale catalyst particles on a support which permits selective placement of the particles and direct deposit of the particles on the end use substrate, without the need for extremes of temperature and pressure required by prior art processes. In addition, when a "flow-through" apparatus is used the process is also continuous, providing desired economies of scale.

## Claims

1. A process for producing nano-scale catalyst non-noble metal particles having an average diameter of no greater than 1,000 nm deposited on a support (130), comprising:
a) feeding (140a, 140b) at least one decomposable moiety comprising a non-noble metal carbonyl and carrier materials of carbon blacks into a flow-through reactor vessel (120);
b) exposing the decomposable moiety to a source of energy (150) sufficient to decompose the moiety by a temperature
but to keep the temperature in the flow through reactor vessel (120) below 250 °C and
produce nano-scale catalyst particles; and
c) depositing the nano-scale catalyst particles
attached to carrier materials of carbon blacks on a support (130).

2. The process of claim 1, comprising feeding at least one decomposable moiety selected from the group consisting of organometallic compounds, metal complexes or metal coordination compounds into the flow-through reactor vessel (120).

3. The process of any one of the preceding claims 1 or 2, comprising continuously feeding at least one decomposable moiety selected from the group consisting of organometallic compounds, metal complexes, metal coordination compounds and mixtures thereof into the flow-through reactor vessel (120).

4. The process of any one of the preceding claims 1 to 3, wherein the flow-through reactor vessel (120) is a fluidized bed reactor, where reactants are borne through the flow-through reactor (120) on a stream of a fluid.

5. The process of any one of the preceding claims, wherein a vacuum is maintained within the flow-through reactor vessel (120) of no less than about 1.33 hPa (1 mm).

6. The process of any one of the preceding claims, wherein a pressure of no greater than 2666 hPa (2000 mm) is maintained with the flow-through reactor vessel (120).

7. The process of any one of the preceding claims, wherein the flow-through reactor vessel (120) is formed of a material which is transparent to the energy supplied by the source of energy (150) employed to decompose the decomposable moiety.

8. The process of any one of the preceding claims, where the source of energy (150) comprises a source of heat.

9. The process of any one of the preceding claims, wherein the support (130) has incorporated therein a resistance heater.

10. The process of any one of the preceding claims, wherein the source of energy comprises a heat lamp (150).

11. The process of any one of the preceding claims, which further comprises cooling (152) the flow-through reactor vessel (120).

12. The process of any one of the preceding claims, wherein the support (130) is the end use substrate for the nano-scale catalyst particles produced.

13. The process of any one of the preceding claims, wherein the support (130) comprises a component of an internal combustion engine catalytic converter.

14. The process of any one of the preceding claims, wherein the support (130) is positioned within the flow-through reactor vessel (120).

15. The process of any one of the preceding claims, wherein oxygen is fed into the reactor vessel (120) to partially oxidize the nano-scale catalyst particles produced by decomposition of the decomposable moiety.

16. The process of any one of the preceding claims, wherein a reducing material is fed into the flow-through reactor vessel (120) to reduce the potential for oxidation of the decomposable moiety.

## Patentansprüche

1. Ein Verfahren zur Herstellung von Nanobereich-Katalysator-nichtedles-MetallTeilchen mit einem mittleren Durchmesser nicht größer als 1.000 nm, die auf einen Aufnehmer (130) abgeschieden werden, welches umfasst:
a) Zuführen (140a, 140b) von mindestens einer zersetzbaren Einheit, die ein nichtedles Metall-Carbonyl umfasst, und Trägermaterialien aus Carbon Blacks in einen Durchfluß-Reaktorbehälter (120);
b) Exponieren der zersetzbaren Einheit an eine Energiequelle (150), die ausreicht, um die Einheit bei einer Temperatur zu zersetzen, aber die Temperatur in dem Durchfluß-Reaktorbehälter (120) unter 250 °C zu halten und Nanobereich-Katalysatorteilchen herzustellen, und
c) Abscheiden der Nanobereich-Katalysatorteilchen, die an Trägermaterialien aus Carbon Blacks angelagert sind, auf einen Aufnehmer (130).

2. Das Verfahren von Anspruch 1, das das Zuführen von mindestens einer zersetzbaren Einheit, ausgewählt aus der Gruppe bestehend aus Organometallverbindungen, Metallkomplexen oder Metallkoordinationsverbindungen, in den Durchfluß-Reaktorbehälter (120) umfasst.

3. Das Verfahren nach irgendeinem der vorhergehenden Ansprüche 1 oder 2, welches das kontinuierliche Zuführen von mindestens einer zersetzbaren Einheit, ausgewählt aus der Gruppe bestehend aus Organometallverbindungen, Metallkomplexen, Metallkoordinationsverbindungen und Mischungen hiervon, in den Durchfluß-Reaktorbehälter (120) umfasst.

4. Das Verfahren nach irgendeinem der vorhergehenden Ansprüche 1 bis 3, wobei der Durchfluß-Reaktorbehälter (120) ein Fließbettreaktor ist, in welchem Reaktanten auf einem Strom eines Strömungsmittels durch den Durchfluß-Reaktorbehälter (120) getragen werden.

5. Das Verfahren nach irgendeinem der vorhergehenden Ansprüche, wobei ein Vakuum von nicht weniger als 1,33 hPa (1 mm) innerhalb des Durchfluß-Reaktorbehälters (120) beibehalten wird.

6. Das Verfahren nach irgendeinem der vorhergehenden Ansprüche, wobei ein Druck nicht höher als 2666 hPa (2000 mm) innerhalb des Durchfluß-Reaktorbehälters (120) beibehalten wird.

7. Das Verfahren nach irgendeinem der vorhergehenden Ansprüche, wobei der Durchfluß-Reaktorbehälter (120) aus einem Material gebildet ist, welches transparent für die Energie ist, die durch die Energiequelle (150) geliefert wird, welche angewandt wird, um die zersetzbare Einheit zu zersetzen.

8. Das Verfahren nach irgendeinem der vorhergehenden Ansprüche, wobei die Energiequelle (150) eine Wärmequelle umfasst.

9. Das Verfahren nach irgendeinem der vorhergehenden Ansprüche, wobei der Aufnehmer (130) eine darin eingebaute Widerstandsheizung hat.

10. Das Verfahren nach irgendeinem der vorhergehenden Ansprüche, wobei die Energiequelle eine Heizlampe (150) umfasst.

11. Das Verfahren nach irgendeinem der vorhergehenden Ansprüche, welches weiterhin eine Kühlung (152) des Durchfluß-Reaktorbehälters (120) umfasst.

12. Das Verfahren nach irgendeinem der vorhergehenden Ansprüche, wobei der Aufnehmer (130) der Endanwendungsmaterialträger für die hergestellten Nanobereich-Katalysatorteilchen ist.

13. Das Verfahren nach irgendeinem der vorhergehenden Ansprüche, wobei der Aufnehmer (130) eine Komponente eines Brennkraftmaschinen-Katalysators umfasst.

14. Das Verfahren nach irgendeinem der vorhergehenden Ansprüche, wobei der Aufnehmer (130) innerhalb des Durchfluß-Reaktorbehälters (120) positioniert ist.

15. Das Verfahren nach irgendeinem der vorhergehenden Ansprüche, wobei Sauerstoff in den Reaktorbehälter (120) zugeführt wird, um die Nanobereich-Katalysatorteilchen, die durch Zersetzung der zersetzbaren Einheit hergestellt werden, partiell zu oxidieren.

16. Das Verfahren nach irgendeinem der vorhergehenden Ansprüche, wobei ein Reduktionsmittel in den Durchfluß-Reaktorbehälter (120) zugeführt wird, um das Potential der Oxidation der zersetzbaren Einheit zu verringern.

## Revendications

1. Processus pour produire des nanoparticules métalliques non nobles de catalyseur ayant un diamètre moyen qui n'est pas supérieur à 1.000 nm déposées sur un support (130) comprenant :
a) l'alimentation (140a, 140b) d'au moins une moitié décomposable comprenant un carbonyle métallique non noble et des matériaux de support de noirs de carbone dans un réacteur d'écoulement (120) ;
b) l'exposition de la moitié décomposable à une source d'énergie (150) suffisante pour décomposer la moitié à une température mais pour maintenir la température dans le réacteur d'écoulement (120) au-dessous de 250 °C et pour produire des nanoparticules de catalyseur ; et
c) le dépôt des nanoparticules de catalyseur attachées aux matériaux de support de noirs de carbone sur un support (130).

2. Processus selon la revendication 1 comprenant l'alimentation d'au moins une moitié décomposable sélectionnée dans le groupe comprenant des composants organométalliques, des complexes métalliques ou des composés métalliques de coordination dans la cuve du réacteur d'écoulement (120).

3. Processus selon l'une quelconque des revendications précédentes 1 ou 2 comprenant l'alimentation en continu d'au moins une moitié décomposable sélectionnée dans le groupe comprenant des composants organométalliques, des complexes métalliques, des composés métalliques de coordination et des mélanges de ceux-ci dans la cuve du réacteur d'écoulement (120).

4. Processus selon l'une quelconque des revendications précédentes 1 à 3 dans lequel la cuve du réacteur d'écoulement (120) est un réacteur à lit fluidisé où des réactants sont supportés à travers le réacteur d'écoulement (120) sur un courant de fluide.

5. Processus selon l'une quelconque des revendications précédentes dans lequel un vide qui n'est pas inférieur à 1,33 hPa (1 mm) est maintenu à l'intérieur de la cuve de réacteur d'écoulement (120).

6. Processus selon l'une quelconque des revendications précédentes dans lequel une pression qui n'est pas supérieure à 2666 hPa (2000 mm) est maintenue avec la cuve de réacteur d'écoulement (120).

7. Processus selon l'une quelconque des revendications précédentes dans lequel la cuve de réacteur d'écoulement (120) est formée en un matériau qui est transparent à l'énergie fournie par la source d'énergie (150) employée pour décomposer la moitié décomposable.

8. Processus selon l'une quelconque des revendications précédentes dans lequel la source d'énergie (150) comprend une source de chaleur.

9. Processus selon l'une quelconque des revendications précédentes dans lequel le support (130) a un chauffage par résistance qui y est incorporé.

10. Processus selon l'une quelconque des revendications précédentes dans lequel la source d'énergie comprend une lampe chauffante (150).

11. Processus selon l'une quelconque des revendications précédentes qui comprend de plus le refroidissement (152) de la cuve de réacteur d'écoulement (120).

12. Processus selon l'une quelconque des revendications précédentes dans lequel le support (130) est le substrat d'utilisation finale pour les nanoparticules métalliques produites.

13. Processus selon l'une quelconque des revendications précédentes dans lequel le support (130) comprend un composant d'un convertisseur catalytique de moteur à combustion interne.

14. Processus selon l'une quelconque des revendications précédentes dans lequel le support (130) est positionné à l'intérieur de la cuve de réacteur d'écoulement (120).

15. Processus selon l'une quelconque des revendications précédentes dans lequel l'oxygène est alimenté dans la cuve de réacteur (120) pour oxyder partiellement les nanoparticules métalliques de catalyseur produites par décomposition de la moitié décomposable.

16. Processus selon l'une quelconque des revendications précédentes dans lequel un matériau réducteur est alimenté dans la cuve de réacteur d'écoulement (120) pour réduire le potentiel pour oxydation de la moitié décomposable.
